# EUROPEAN PATENT SPECIFICATION

(11) **EP 2 597 743 B1**
(45) Date of publication and mention of the grant of the patent: **19.07.2017**
(21) Application number: 12193652.0
(22) Date of filing: 21.11.2012
(51) Int. Cl.: H02G 3/12

(54) **An installation box for mounting an electrical installation device**
Installationskasten zur Montage an eine elektrische Installationsvorrichtung
Ensemble de montage pour le montage d'un dispositif d'installation électrique

(30) Priority: 23.11.2011 DK 201170639
(43) Date of publication of application: 29.05.2013
(73) Proprietor: Schneider Electric Danmark A/S, 2750 Ballerup (DK)
(72) Inventor: Nilsson, Mattias, 26083 Vejbystrand (SE)
(74) Representative: Awapatent A/S

(56) References cited:
- EP-A1- 1 926 192
- EP-A1- 2 375 523
- EP-A2- 0 293 614
- EP-A2- 1 659 668
- EP-A2- 2 259 400
- WO-A1-02/13346
- DE-A1- 2 312 605
- DE-A1- 2 506 725
- DE-A1- 19 636 500
- US-B1- 8 148 634

## Description

The present invention relates to an installation box for accommodating an electrical installation device, the installation box comprising a distal end part having an essentially cylindrical compartment adapted for accommodating at least partially said electrical installation device, where the compartment has predetermined internal and external diameters, and a proximal end part comprising a proximal end surface and a recess in said proximal end surface, where said proximal end surface constitutes a plane surface surrounding said recess , said recess having dimensions across said proximal end surface, which are larger than said external diameter of the essentially cylindrical compartment.

A prior art installation box according to the preamble of claim 1 is known from WO02/13346A1.

Installation boxes, such as wall or ceiling boxes, related to the above-mentioned type are widely used in the Nordic countries for installations behind e.g. board walls or ceilings. Examples of such boxes can be found in the installation instruction: 09D7693_04 from LK A/S, entitled "Installationsvejledning til PL dåse 55mm/16mm, 35mm/16mm and 55mm/16mm dåse i skibsudførelse og 52mm/20mm", 12/2000.

To allow the same installation box to be used for different spacings between the mounting base, on which the installation box is mounted, and the surface of the board wall or ceiling, adjustable spacers of a few predetermined heights are used. These spacers are generally cylindrical spacer rings adapted to be inserted to various degrees into the cylindrical compartment of the installation box.

The installation boxes are typically mounted on the support, the spacers placed in the cylindrical compartment and adjusted to height, then a magnetic locating device is placed in them, and finally they are covered entirely when the wall or ceiling board is mounted.

The cylindrical shape of the compartment and the spacer makes it quite easy to uncover the installation box again when it is needed for the installation of an installation device such as a switch, a socket, a dimmer or the like. All the electrician needs to do is to locate the magnetic locating device using an appropriate seeker, and then drill a circular hole of a predetermined diameter corresponding to the dimension of the cylindrical mounting part and the spacer. The magnetic locating device can then be removed for reuse in another installation, upon which the installation device may be mounted by inserting it partially through the hole into the spacer and securing it thereto, the spacer thus serving as a receptacle for the installation device.

As to the installation devices there is a desire to construct them so that they do not protrude too far over the mounting surface, this *inter alia* makes the installation devices less prone to destruction from impacts, as they are less likely to get hit, but it also improves the aesthetic appearance.

However, to make the installation devices more flush with the mounting surface, e.g. not protruding more than three millimetres from the mounting surface, in the following referred to as flush mounting, necessitates that a larger part of installation device, i.e. of the part comprising the mechanic, electric and electronic parts, is located within the installation box. In an existing installation this is not an easy task because the diameters of the spacer matches that of the cylindrical compartment of the existing installation box, which, in turn, is located under the board and therefore cannot be replaced without destroying the board by making a large hole in it.

Based on this, it is the object of the present invention to provide an installation box which lends itself to use with an existing electrical installation devices, and which is suitable for accommodating installation devices adapted for flush mounting.

According to the present invention this object is achieved by a installation box according to the opening paragraph, where the recess is adapted for accommodating said electrical installation device. Thereby, by simply cutting a larger hole in the board it becomes possible to accommodate parts of the installation device in the proximal end part of the cylindrical compartment at the level of the board. Moreover, existing electrical installation devices with a square mounting plate may easily be adjusted to fit into the installation box by rounding the corners of the mounting plate.

According to the invention, the perimeter of said proximal end surface is circular. This allows the simple use of the existing magnet locator and a hole saw for drilling a hole adapted to accommodate the proximal end part of the cylindrical compartment.

According to another preferred embodiment, said recess has a generally polygonal shape with respect to said proximal end surface. This provides end surface areas adapted to support the installation device.

According to a further preferred embodiment, said proximal end part of the cylindrical compartment is adapted to allow the removal of at least a part of the proximal end surface along sides of said generally polygonal shape. This allows the use of several installation boxes side by side, thereby allowing the installation boxes to accommodate ganged installation devices.

According to yet a further preferred embodiment, the material of said proximal end part has a reduced thickness at at least some corners of said recess and along the sides of said recess. This allows the parts of the proximal end surfaces to be readily broken away manually or by the use of simple tools such as pliers, e.g. when they need to be arranged side by side for at ganged installation devices as explained above.

According to another embodiment a bottom surface of the recess has a generally polygonal shape corresponding to said generally polygonal shape with respect to the proximal end surface, and the material of said proximal end part has a reduced thickness along the sides of the bottom of said recess. This allows the parts of the proximal end surface to be broken away without leaving any upstanding walls, which in turn provides one large recess for accommodation parts of the ganged installation device, when several installation boxes are mounted side by side.

According to another embodiment said essentially cylindrical compartment comprises a spacer having a distal end part comprising a first cylindrical mounting part having an external diameter adapted to fit within the essentially cylindrical compartment of the installation box. This allows the end surface of the electrical installation device to be arranged flush with the mounting surface, the mounted installation device thus being supported both by the wall or ceiling and the end surface of the proximal end part.

According to yet a further embodiment that allows for even more flexible flush mounting of the electrical installation device with the mounting surface, said essentially cylindrical compartment is adapted for adjusting the position of the distal end part of the spacer in the cylindrical compartment of said installation box.

In a further practical embodiment the proximal end part of the installation box is positioned on a proximal end part of the spacer. This makes it possible to use the advantages of the invention in existing installation boxes.

According to a further embodiment, an aperture communicating with the first cylindrical mounting part is provided in the bottom of said recess. This allows easy access to the wiring in the installation box as well as providing additional room for accommodating parts of the installation device.

According to yet another embodiment, said aperture is located centrally in said recess. This allows the proximal end part to have rotational symmetry, e.g. a fourth order rotational symmetry if the generally polygonal shape of the recess is square. This in turn makes the correct positioning of the electrical installation device easier.

In a further preferred embodiment a side portion of the installation box is provided with a second spacer, i.e. the cylindrical compartment is slightly offset from the centre of the square base dimensions of the installation box. Since the proximal end part has a portion with dimensions across larger than the external diameter of the cylindrical mounting part a second spacer positioned on the side of the installation box may ensure that, when the installation box is mounted on a batten, a hole for accommodating the proximal end part drilled by a hole saw, will not encounter the batten.

The invention will now be described in greater detail using nonlimiting exemplary embodiments and with reference to the schematic drawings, on which:
Fig. 1 is a perspective view of an installation box according to an embodiment of the present invention,

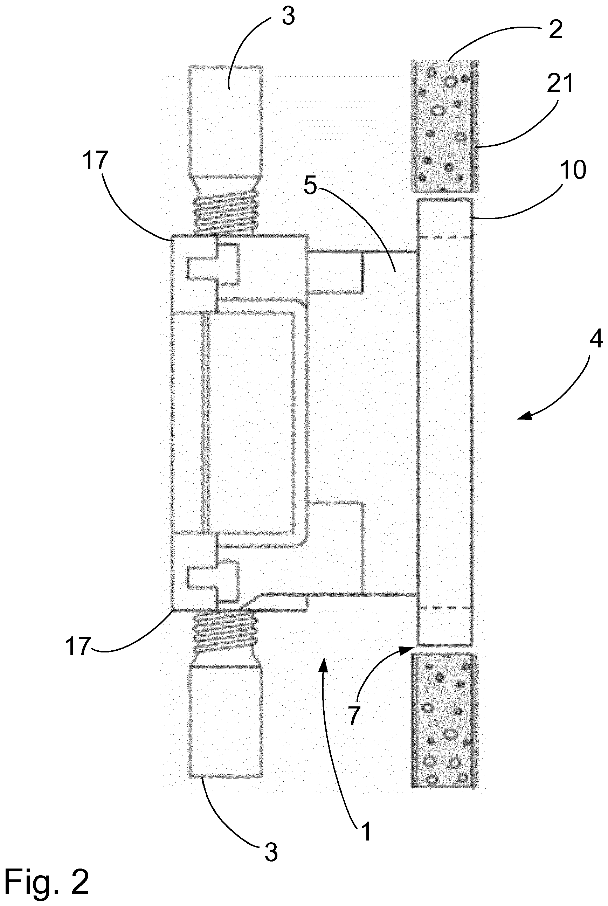

Fig. 2 is a side view of the installation box of Fig. 1 mounted behind the front surface of a board,
Fig. 3 is a side view of the installation box corresponding to that of Fig. 2, but with a flush mounted installation device mounted, and
Fig. 4 is a side view of a prior art installation box with a protruding electrical installation.

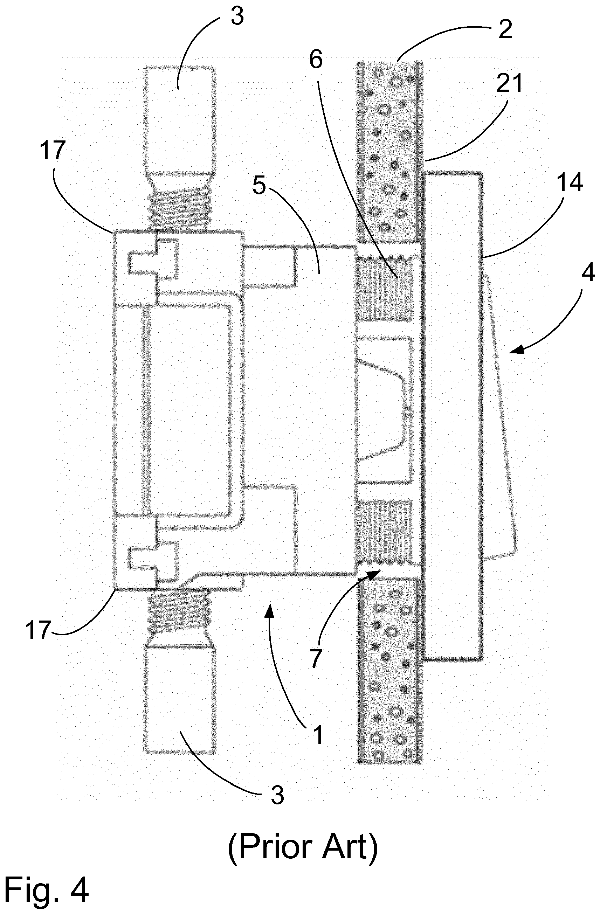

Turning first to Fig. 4 there is shown a prior art installation box 1 mounted behind a board 2 such as a plaster board of a wall. Conduits 3 are connected to the installation box 1 for leading in and out the electrical wiring to an electrical installation device 4 such as a switch. The installation box 1 has a generally cylindrical mounting part 5 in which a spacer 6 may be inserted at a suitable distance to adapt the overall height of the assembly of installation box 1 and spacer 6 to the space between a mounting base (not shown) for the installation box 1 and the board 2. The electrical installation device 4 is mounted on the proximal end of the spacer 6 with fastening means such as screws 8 (not visible in Fig. 4) through a preferably circular hole 7 in the board 2 so that one part of the installation device 4 protrudes in front of the board 2 on one side and another protrudes behind the board 2 into the spacer 6 of the cylindrical mounting part 5 of the installation box. Front and behind of the board 2 being understood in the normal sense of the user of the installation device 4, front being the visible side on the right-hand side of the board 2 in Fig. 4 and behind being on the left-hand side of the board 2 in Fig. 4, invisible to the user located on the right-hand side of the board in Fig. 4.

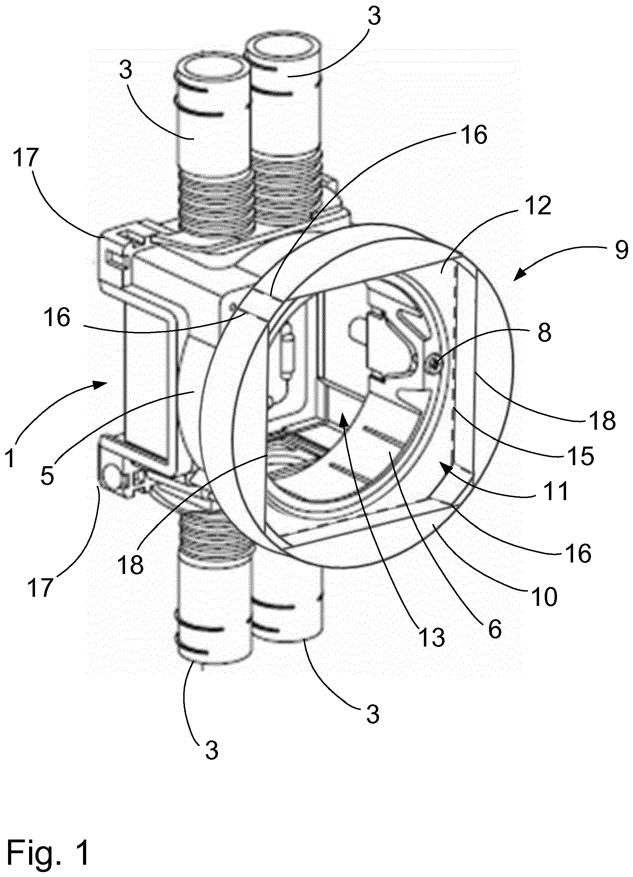

Turning now to Fig. 1, the installation box according to the present invention is shown. The installation box 1 is with respect to some parts of identical or similar construction to the one in Fig. 4. Accordingly same reference numerals are used for the same or similar parts throughout the description.

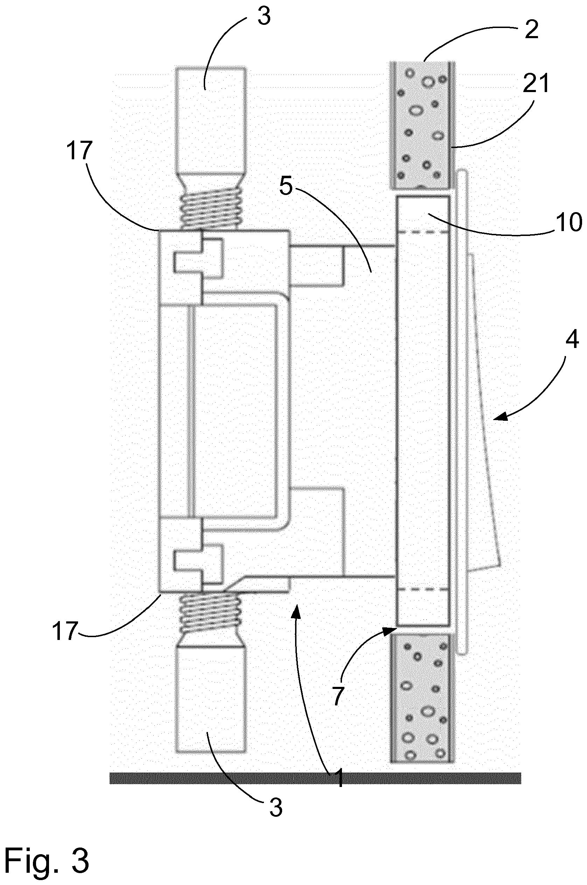

The installation box 1 has a distal end part comprising the cylindrical compartment 5 having an external diameter. The installation box also comprises a second part 9 at the proximal end. Proximal end is to be understood the one facing the front the installation box is installed in a wall. The second part comprises an essentially plane proximal end surface 10. The second part has a recess 11 in said otherwise essentially plane end surface 10 for accommodating said electrical installation device 4, not shown in Fig. 1. For references to the installation device 4 cf. Fig. 3. The recess 11 has dimensions across said end surface 10, which are larger than said external diameter of the cylindrical compartment 5. Thereby a bottom surface 12 of the recess 11 is provided. Hence a portion of the proximal end part is larger than the external diameter of the cylindrical compartment. If, as preferred, an aperture 13 is formed in the bottom surface 12 to allow e.g. wires to be drawn from the installation device 4 in the recess 11 to the conduits 3 at the bottom of the installation box 1, i.e. at the distal end, the bottom surface 12 presents shoulders or ledges around said aperture 13. These shoulders or ledges may serve as backing and support for the installation device 4. The aperture 13 is preferably arranged centrally so as to match the rotational symmetry of the recess 11. This facilitates the positioning of the spacer 6, as the e.g. depicted square recess will have an fourth order symmetry, thus allowing identical mounting at four positions spaced angular apart by 90°. As will be described later, the side length of the square or, to be precise, the distance between opposite sides 18 of the square of the recess 11 in the end surface is thus, preferably, matched to the base dimensions of the known installation box 1, i.e. from corner 17 to corner 17.

However, regarding support for the installation device 4, an important feature of the preferred embodiment of the present invention is the proximal end surface 10 surrounding the recess 11. As can be seen from Fig. 1 the perimeter of the proximal end surface 10 is circular. A circular perimeter is required because this matches a circular hole, which, in turn, is very easy to provide correctly by the electrician, using a hole saw and the existing magnetic locating means and seeker already provided for the installation box 1 and the prior art spacer 6. The recess 11 on the other hand has a generally polygonal shape, in the illustrated embodiment more specifically a square shape with slightly rounded corners following the perimeter of the proximal end surface. Other generally polygonal shapes, symmetrical or not, such as rectangular, hexagonal or octagonal could of course also be used. In fact the recess 11 need not be a polygon at all, but could e.g. be circular.

As can be seen from Fig. 3, the combination of the recess 11 and the proximal end surface 10 allows the proximal end surface 10 to lie flush with the front surface 21 of the board 2, thus replacing the board 2 as support for the installation device 4. This is important because, as compared to the prior art, the hole necessary in the board 2 needs to be larger as compared to known solutions. Consequently, as can be seen by comparison between Figs. 3 and 4 the faceplate 14 of the installation device 4 overlaps the board 2 far less, the board thus provides less support if the installation device 4, such as the illustrated switch, is operated, e.g. struck hard by hand and or operated with a tip of a shoe. This in turn means an increased risk of the installation device 4 becoming loose from the installation box 1. However, as also seen by comparison between Figs. 3 and 4, the larger hole allows a larger part of the installation device to be accommodated at the level of the board, which in turn allows the thickness of the faceplate 14 to be reduced to about 2-3 mm.

In an alternative embodiment the proximal end surface 10 of the second part of the installation box extends from the proximal end of the spacer 6. This allows a spacer 6 with a proximal end surface 10 and a recess in said end surface according to the invention to be mounted in existing installation boxes. This embodiment provides for the use of flush installations devices with the use existing known installation devices, which the electrician is used to work with and comfortable about installing, and which is already in production. Apart from that the electrician may use existing techniques for the installation of the installation box 1, compatibility between a known installation box 1 and receptacle spacer according to the mentioned alternative embodiment, also means that the decision about the use of flush mounting installation devices or traditional need not be taken at an early stage in construction or refurbishing of a building. Rather, if the owner of an existing electrical installation with traditional protruding installation devices 4 mounted in switch boxes 1 and spacers 6 all the electrician needs to do is to remove the old installation device 4, place temporarily the known magnetic locator in the spacer 6 and drill a larger diameter hole in the wall than the existing using a hole saw with a larger diameter. He can then substitute the spacer 6 and mount the new flush installation device 4. Apart from the fact that the hole saw has a larger diameter than the traditional ones, e.g. a T80 hole saw providing a Ø 84 mm hole instead of the traditionally used T70 hole saw providing a Ø 72 mm hole, the electrician is entirely comfortable with this procedure and will not be afraid of destroying the wall unnecessarily as could be the case if he was to saw an hole in the wall using unfamiliar tools of another trade, such as a carpenter's compass saw.

Likewise, if a new installation has been made using installation boxes 1, spacers 6 and magnetic locators hidden behind boards 2, the electrician just needs to pick a larger hole saw, and use that together with the magnetic seeker when penetrating the board 2.

Generally, the in order to match various values of the space between the mounting base (not shown) of the installation box 1 and the front surface 21 of the board 2, the spacer 6 of the invention may be constructed with different lengths of the first cylindrical mounting part 9. Alternatively, means adapted for adjusting the position of the distal end part in the cylindrical compartment of said installation box so as to continuously cover a wide range of spaces between the mounting base of the installation box 1 and the front surface 21 of the board 2.

However, the fact that the recess 11 is larger than the external diameter of the cylindrical mounting part 9, and that consequently the perimeter of the proximal end surface 10 is even larger, may provide a problem when several installation boxes 1 are mounted side by side to accommodate several installation devices or ganged installation devices sharing a common front plate 14.

The proximal end of the installation box is therefore adapted to allow the removal of at least a part of the proximal end surface 10 along sides of said generally polygonal shaped recess 11. Preferably this is done by reducing the thickness of the material of the receptacle or by suitable perforations along preferred breaking lines. In Fig. 1, the bottom 12 of the recess 11 has a shape corresponding to the polygonal shape at the proximal end surface 10, i.e. a generally square shape with cut away corners. Four main breaking lines 15 indicated by an interrupted line is provided along the four sides of the square. Eight secondary breaking lines 16 are provided perpendicular to the main breaking lines 15 at the end thereof i.e. at the transition between the sides of the square and the cut away corners. This provides four circle segments, which may individually be broken off leaving the recess open at the respective side (or sides), where the circle segment has been broken off. This, in turn, allows the recesses 11 of two or more adjacent proximal end parts to form one common recess for accommodating a ganged installation device 4. Still, however, the holes for each of the proximal end parts may be provided using the hole saw, with which the electrician is familiar.

It should of course be noted that is possible to provide the main breaking lines in other places than at the bottom 12 of the recess 11 of the proximal end part. They might also or instead be located at the proximal end surface 10, i.e. at the edge 18 of the recess 11. This would leave an upstanding wall separating the recesses 11 of adjacent installation boxes 1, but still allowing the use of installation boxes 1 mounted side by side.

In the above the present invention has been described based on embodiments. It will be apparent for the skilled person that numerous variations are possible without deviating from the scope of the invention as laid down in the appended claims.

## Claims

1. An installation box (1) for accommodating an electrical installation device (4), the installation box comprising a distal end part having an essentially cylindrical compartment (5) adapted for accommodating at least partially said electrical installation device (4), where the compartment has predetermined internal and external diameters, and a proximal end part (9) comprising a proximal end surface (10) and a recess (11) in said end surface (10), where said proximal end surface (10) constitutes a plane surface surrounding said recess (11), said recess (11) having dimensions across said proximal end surface (10), which are larger than said external diameter of the essentially cylindrical compartment (5), **characterized in that** the perimeter of said proximal end surface (10) is circular, and
the recess (11) is adapted for accommodating said electrical installation device (4).

2. An installation box (1) according to claim 1, wherein the recess (11) is provided with a bottom surface (12).

3. An installation box (1) according to claim 2, wherein an aperture (13) is formed in the bottom surface (12), the bottom surface (12) presenting shoulders or ledges around said aperture (13).

4. An installation box (1) according to claim 3, wherein the shoulders or ledges are adapted to serve as backing and support for the installation device (4).

5. An installation box (1) according to claim 4, wherein said recess (11) has a generally polygonal shape with respect to said proximal end surface (10).

6. An installation box (1) according to claim 5, wherein the proximal end part (9) is adapted to allow the removal of at least a part of the proximal end surface (10) along sides of said generally polygonal shape.

7. An installation box (1) according to claim 6, wherein the material of said proximal end part (9) has a reduced thickness at at least some corners of said recess and along the sides of said recess (11).

8. An installation box (1) according to claim 7, when depending on claim 2, wherein the bottom surface (12) of the recess has a generally polygonal shape corresponding to said generally polygonal shape with respect to the proximal end surface (10), and the material of said proximal end part (9) has a reduced thickness (15) along the sides of the bottom of said recess (11).

9. An installation box (1) according to any one of the preceding claims, wherein said essentially cylindrical compartment (5) comprises a spacer (6) having a distal end part comprising a first cylindrical mounting part having an external diameter adapted to fit within the cylindrical compartment (5) of the installation box (1).

10. An installation box (1) according to claim 9, wherein said essentially cylindrical compartment (5) is adapted for adjusting the position of the distal end part of the spacer (6) in the essentially cylindrical compartment (5) of said installation box (1).

11. An installation box (1) according to claim 9 or 10 wherein the proximal end part (9) of the installation box (1) is positioned on a proximal end part of the spacer (6).

12. An installation box (1) according to any one of the preceding claims, when depending on claim 3, wherein said aperture (13) is located centrally in said recess (11).

13. An installation box (1) according to any one of the preceding claims, wherein a side portion of the installation box (1) is provided with a second spacer.

## Patentansprüche

1. Installationskasten (1) zur Aufnahme einer elektrischen Installationsvorrichtung (4), wobei der Installationskasten ein entfernt gelegenes Endteil, das einen im Wesentlichen zylindrischen Raum (5) aufweist, der geeignet ist, die elektrische Installationsvorrichtung (4) wenigstens zum Teil aufzunehmen, wobei der Raum einen vorgegebenen Innen- und Außendurchmesser umfasst, und ein nahe gelegenes Endteil (9) umfasst, das eine nahe gelegene Endfläche (10) und eine Vertiefung (11) in der Endfläche (10) umfasst, wobei die nahe gelegene Endfläche (10) eine ebene Fläche bildet, die die Vertiefung (11) umgibt, wobei die Vertiefung (11) Abmessungen über die nahe gelegene Endfläche (10) aufweist, die größer als der Außendurchmesser des im Wesentlichen zylindrischen Raums (5) sind, **dadurch gekennzeichnet, dass** der Umfang der nahe gelegenen Endfläche (10) kreisrund ist und
die Vertiefung (11) geeignet ist, die elektrische Installationsvorrichtung (4) aufzunehmen.

2. Installationskasten (1) nach Anspruch 1, wobei die Vertiefung (11) mit einer Bodenfläche (12) versehen ist.

3. Installationskasten (1) nach Anspruch 2, wobei eine Öffnung (13) in der Bodenfläche (12) ausgebildet ist, wobei die Bodenfläche (12) Schultern oder Absätze um die Öffnung (13) herum bietet.

4. Installationskasten (1) nach Anspruch 3, wobei die Schultern oder Absätze geeignet sind, als Rückenstärkung und Auflage für die Installationsvorrichtung (4) zu dienen.

5. Installationskasten (1) nach Anspruch 4, wobei die Vertiefung (11) eine im Allgemeinen polygonale Form in Bezug auf die nahe gelegene Endfläche (10) aufweist.

6. Installationskasten (1) nach Anspruch 5, wobei das nahe gelegene Endteil (9) geeignet ist, die Entfernung wenigstens eines Teils der nahe gelegenen Endfläche (10) entlang Seiten der im Allgemeinen polygonalen Form zu ermöglichen.

7. Installationskasten (1) nach Anspruch 6, wobei das Material des nahe gelegenen Endteils (9) eine verminderte Dicke an wenigstens einigen Ecken der Vertiefung und entlang den Seiten der Vertiefung (11) aufweist.

8. Installationskasten (1) nach Anspruch 7 bei Abhängigkeit von Anspruch 2, wobei die Bodenfläche (12) der Vertiefung eine im Allgemeinen polygonale Form aufweist, die der im Allgemeinen polygonalen Form in Bezug auf die nahe gelegene Endfläche (10) entspricht, und das Material des nahe gelegenen Endteils (9) eine verminderte Dicke (15) entlang den Seiten des Bodens der Vertiefung (11) aufweist.

9. Installationskasten (1) nach einem der vorhergehenden Ansprüche, wobei der im Wesentlichen zylindrische Raum (5) einen Abstandshalter (6) umfasst, der ein entfernt gelegenes Endteil aufweist, das ein erstes zylindrisches Montageteil umfasst, das einen Außendurchmesser aufweist, der geeignet ist, in den zylindrischen Raum (5) des Installationskastens (1) zu passen.

10. Installationskasten (1) nach Anspruch 9, wobei der im Wesentlichen zylindrische Raum (5) geeignet ist, die Position des entfernt gelegenen Teils des Abstandshalters (6) in dem im Wesentlichen zylindrischen Raum (5) des Installationskastens (1) einzustellen.

11. Installationskasten (1) nach Anspruch 9 oder 10, wobei das nahe gelegene Endteil (9) des Installationskastens (1) an einem nahe gelegenen Endteil des Abstandshalters (6) positioniert ist.

12. Installationskasten (1) nach einem der vorhergehenden Ansprüche bei Abhängigkeit von Anspruch 3, wobei sich die Öffnung (13) mittig in der Vertiefung (11) befindet.

13. Installationskasten (1) nach einem der vorhergehenden Ansprüche, wobei ein Seitenabschnitt des Installationskastens (1) mit einem zweiten Abstandshalter versehen ist.

## Revendications

1. Boîtier d'installation (1) permettant de recevoir un dispositif d'installation électrique (4), le boîtier d'installation comprenant une partie extrémité distale comportant un compartiment essentiellement cylindrique (5) conçu pour recevoir au moins en partie ledit dispositif d'installation électrique (4), le compartiment ayant un diamètre interne et un diamètre externe prédéterminés, et une partie extrémité proximale (9) comprenant une surface d'extrémité proximale (10) et un évidement (11) dans ladite surface d'extrémité (10), ladite surface d'extrémité proximale (10) constituant une surface plane entourant ledit évidement (11), ledit évidement (11) ayant des dimensions sur toute ladite surface d'extrémité proximale (10) qui sont supérieures audit diamètre externe du compartiment essentiellement cylindrique (5),
**caractérisé en ce que** :
le périmètre de ladite surface d'extrémité proximale (10) est circulaire, et
l'évidement (11) est conçu pour recevoir ledit dispositif d'installation électrique (4).

2. Boîtier d'installation (1) selon la revendication 1, dans lequel l'évidement (11) est pourvu d'une surface inférieure (12).

3. Boîtier d'installation (1) selon la revendication 2, dans lequel une ouverture (13) est ménagée dans la surface inférieure (12), la surface inférieure (12) présentant des épaulements ou rebords autour de ladite ouverture (13).

4. Boîtier d'installation (1) selon la revendication 3, dans lequel les épaulements ou rebords sont conçus pour servir d'appui et de support pour le dispositif d'installation (4).

5. Boîtier d'installation (1) selon la revendication 4, dans lequel ledit évidement (11) présente une forme généralement polygonale par rapport à ladite surface d'extrémité proximale (10).

6. Boîtier d'installation (1) selon la revendication 5, dans lequel la partie extrémité proximale (9) est conçue pour permettre le retrait d'au moins une partie de la surface d'extrémité proximale (10) le long de côtés de ladite forme généralement polygonale.

7. Boîtier d'installation (1) selon la revendication 6, dans lequel le matériau de ladite partie extrémité proximale (9) a une épaisseur réduite au niveau d'au moins certains coins dudit évidement et le long des côtés dudit évidement (11).

8. Boîtier d'installation (1) selon la revendication 7, prise en dépendance de la revendication 2, dans lequel la surface inférieure (12) de l'évidement présente une forme généralement polygonale correspondant à ladite forme généralement polygonale par rapport à la surface d'extrémité proximale (10), et le matériau de ladite partie extrémité proximale (9) a une épaisseur réduite (15) le long des côtés du fond dudit évidement (11).

9. Boîtier d'installation (1) selon l'une quelconque des revendications précédentes, dans lequel ledit compartiment essentiellement cylindrique (5) comprend un élément d'espacement (6) ayant une partie extrémité distale comprenant une première partie de montage cylindrique ayant un diamètre externe conçu pour entrer dans le compartiment cylindrique (5) du boîtier d'installation (1).

10. Boîtier d'installation (1) selon la revendication 9, dans lequel ledit compartiment essentiellement cylindrique (5) est conçu pour régler la position de la partie extrémité distale de l'élément d'espacement (6) dans le compartiment essentiellement cylindrique (5) dudit boîtier d'installation (1).

11. Boîtier d'installation (1) selon la revendication 9 ou 10, dans lequel la partie extrémité proximale (9) du boîtier d'installation (1) est positionnée sur une partie extrémité proximale de l'élément d'espacement (6).

12. Boîtier d'installation (1) selon l'une quelconque des revendications précédentes, prise en dépendance de la revendication 3, dans lequel ladite ouverture (13) est située au centre dudit évidement (11).

13. Boîtier d'installation (1) selon l'une quelconque des revendications précédentes, dans lequel une partie latérale du boîtier d'installation (1) est munie d'un second élément d'espacement.
